# EUROPÄISCHE PATENTSCHRIFT

(11) **EP 3 131 109 B1**
(45) Veröffentlichungstag und Bekanntmachung des Hinweises auf die Patenterteilung: **11.10.2017**
(21) Anmeldenummer: 15180732.8
(22) Anmeldetag: 12.08.2015
(51) Int. Cl.: H01H 13/705

(54) **SPALTFREIE TASTE**
GAPLESS KEY
TOUCHE SANS ESPACE

(43) Veröffentlichungstag der Anmeldung: 15.02.2017
(73) Patentinhaber: Ableton AG, 10119 Berlin (DE)
(72) Erfinder: HARMS, Oliver, 15741 Bestensee (DE)
(74) Vertreter: Ruschke, Hans Edvard

(56) Entgegenhaltungen:
- DE-A1-102011 001 813
- DE-B4-102004 033 972
- JP-A- 2008 305 694

## Beschreibung

### GEBIET DER TECHNIK

Die vorliegende Erfindung betrifft eine spaltfreie Taste und eine spaltfreie Multitaste, deren Einzelbereiche individuell betätigbar sind.

### HINTERGRUND UND STAND DER TECHNIK

Tasten finden sich in diversen Bereichen der Technik wie z.B. in Computern, Automobilen, Musikinstrumenten u.v.a. Dabei besteht ein generelles Problem herkömmlicher Tasten im Vorhandensein eines Spaltes zwischen der eigentlichen Taste und der Einrichtung, in die sie eingebettet ist. Der Spalt gewährleistet zwar einerseits die Bewegbarkeit der Taste, kann jedoch andererseits oft zu Verschmutzungen bis hin zum völligen Funktionsausfall führen, wenn z.B. eine Flüssigkeit in den Spalt eintritt und evtl. darunter befindliche Elektronik beschädigt. Des weiteren führt der Spalt dazu, dass Licht hindurchdringen kann und verschiedene Tasten in Beleuchtungshinsicht nicht sauber voneinander getrennt - d.h. nicht unabhängig voneinander beleuchtbar - sind. Es sind verschiedene Versuche unternommen worden, die vom Spalt herrührenden Probleme zu minimieren. So offenbart die WO 2007/053966 A1 eine integrierte Taste zur wenigstens teilweisen Einbettung in oder auf einem Träger, der wenigstens im Bereich der Taste an seiner Oberfläche mit einem Oberflächenmaterial überzogen ist. Die Taste ist in einem Ausschnitt des Oberflächenmaterials angeordnet und weist einen ersten im wesentlichen im Träger angeordneten Bereich und einen zweiten zum Auslösen einer Funktion vorgesehenen Tastenknopf auf. Der Tastenknopf überdeckt bereichsweise den Ausschnitt im Oberflächenmaterial und ist mit diesem kraftschlüssig und/oder formschlüssig verbunden, wodurch eine lichtdichte Trennung einzelner Tasten nicht möglich ist.

Die DE 196 340 51 C1 offenbart eine Schalteranordnung für ein elektrisches Gerät mit einer Taste. Durch Betätigung der Taste wird ein in einem Träger geführter Stößel derart in eine Betätigungsrichtung bewegt, dass eine in der Betätigungsrichtung liegende Kontakteinheit betätigt wird. Hierbei sind die Taste und der Stößel an einander gegenüber liegenden Berührungsflächen senkrecht zur Betätigungsfläche verschiebbar und beide Teile unabhängig von der Verschiebung in die Betätigungsrichtung bewegbar. Allerdings ist ein Spalt um die Taste herum vorhanden, was zu den eingangs erwähnten Problemen führt.

Es wurde auch offenbart ein Bedienfeld mit mehreren Bedienelementen, wobei an der Unterseite der Bedienelemente Dichtungselemente aus einer elastischen Kunststoffdichtung ausgebildet sind, die sich jeweils von der der Bedienseite des Bedienelements entgegengesetzten Unterseite bogenförmig zu benachbarten Bedienelementen hin erstrecken. Auch in dieser Anordnung ist ein Spalt zwischen einem Bedienelement und der elastischen Kunststoffdichtung vorhanden, was ebenfalls zu den eingangs erwähnten Problemen führt.

Die JP 2008 305694 offenbart eine Taste, wobei die Verbindung zwischen dem Führungselement und dem beweglichen Betätigungselement spaltfrei ist, umfassend: ein Führungselement, ein bewegliches Betätigungselement und einen Schalter, der auf einer Montageplatte angeordnet ist, wobei das Führungselement auf der Montageplatte fixiert ist und eine starre Außenwandung aufweist, die einen inneren Schacht mit einer unteren Öffnung und einer oberen Öffnung bildet und an ihrer äußeren Seite im oberen Bereich eine nach innen versetzte Profil-Außenkante sowie einen den Übergang zwischen der oberen Profil-Außenkante und dem verbleibenden unteren Teil der Außenwandung bildenden sich im wesentlichen horizontal erstreckenden Absatz umfasst; das bewegliche Betätigungselement ein aus einem elastischen Material hergestelltes elastisches Tastenelement ist und einen von den Innenwänden des Schachts durch einen Luftspalt beabstandeten massiven mittleren Schaft mit einer oberen Betätigungsfläche oberhalb des Luftspalts umgebende Bewegungssicke und einen am Außenumfang der Bewegungssicke befindlichen Profilbereich, der sich zunächst horizontal auswärts und dann abwärts erstreckt und in einem sich horizontal auswärts erstreckenden Vorsprung endet; wobei der sich horizontal auswärts erstreckende Abschnitt des Profilbereichs oben auf der Außenwandung aufliegt, der sich abwärts erstreckende Abschnitt des Profilbereichs außen an der Profil-Außenkante anliegt und der Vorsprung auf dem Absatz aufliegt und diesen zumindest teilweise abdeckt.

Es besteht also nach wie vor Bedarf an einer Taste, die die vom Spalt zwischen Taste und der Einrichtung, in die sie eingebettet ist, herrührenden Probleme überwindet.

### ZUSAMMENFASSUNG DER ERFINDUNG

Es ist daher ein Ziel der vorliegenden Erfindung, eine Taste vorzusehen, bei der spalttypische Beeinträchtigungen Ihrer Funktion, wie sie z.B. durch in den Spalt zwischen Taste und Gerät eindringende Rückstände verursacht werden, vermieden werden. Des weiteren ist es ein Ziel der vorliegenden Erfindung, eine Taste mit verbesserter Beleuchtungsmöglichkeit vorzusehen, indem eine Streuung des Lichts zwischen verschiedenen Tasten unterbunden wird.

Dies ist erfindungsgemäß erreicht worden mit einer Taste nach Anspruch 1 und einem Verfahren nach Anspruch 15.

Andere vorteilhafte Merkmale der erfindungsgemäßen Taste und ihres Herstellungsverfahrens sind in den Unteransprüchen offenbart wie z.B. eine Multitaste nach Anspruch 10, deren Einzelbereiche völlig spaltfrei zueinander angeordnet und dennoch individuell betätigbar sind.

### KURZBESCHREIBUNG DER ZEICHNUNGEN

- Fig. 1: zeigt eine Explosionsansicht zweier erfindungsgemäßer Tasten;
- Fig. 2: zeigt eine Ansicht erfindungsgemäßer Tastenkorpusse schräg von unten;
- Fig. 3: zeigt eine Ansicht erfindungsgemäßer elastischer Tastenelemente schräg von unten;
- Fig. 4: zeigt eine weitere Ansicht erfindungsgemäßer elastischer Tastenelemente schräg von unten;
- Fig. 5: zeigt eine Ansicht von in Tastenkorpusse eingesetzten elastischen Elementen schräg von unten;
- Fig. 6: zeigt eine Ansicht von in Tastenkorpusse eingesetzten elastischen Elementen schräg von oben;
- Fig. 7: zeigt eine Ansicht von mit elastischen Tastenelementen versehenen und in eine Frontplatte eingesetzten Tastenkorpussen schräg von oben;
- Fig. 8: zeigt eine Ansicht von erfindungsgemäß in eine Montageplatte eingesetzten Tastenkorpussen schräg von oben;
- Fig. 9: zeigt eine Durchsicht auf in eine Montageplatte eingesetzte erfindungsgemäße Tasten von oben.

### BESCHREIBUNG DER BEVORZUGTEN AUSFÜHRUNGSFORMEN

Wie eingangs erwähnt, weisen herkömmliche Tasten einen Spalt zwischen der eigentlichen Taste und der Einrichtung, in die sie eingebettet ist, auf, der zwar einerseits die Bewegbarkeit der Taste gewährleistet, andererseits jedoch diverse Nachteile wie Verschmutzung, Lichtdurchlass etc. mit sich führt.

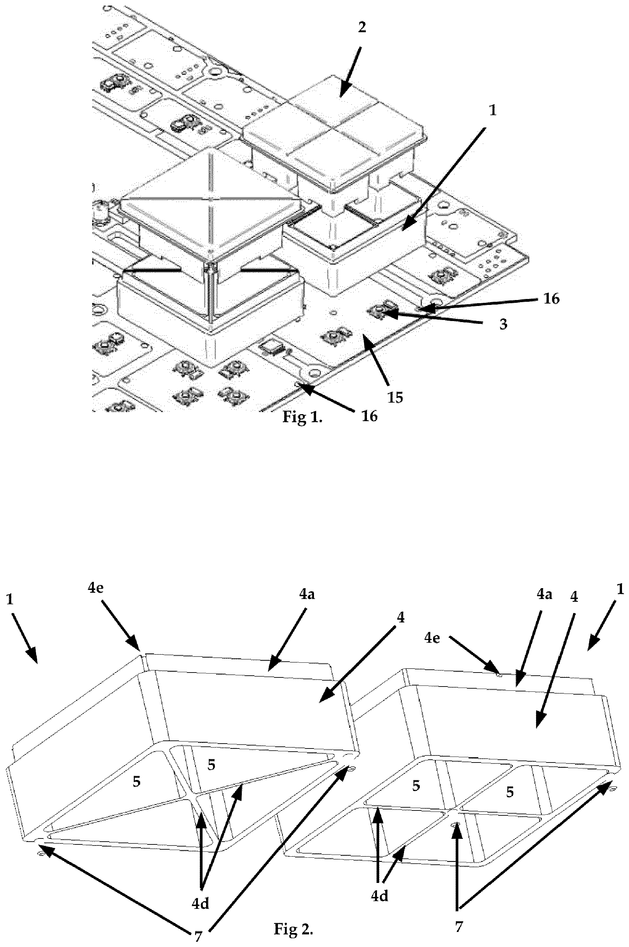

Die vorliegende Erfindung überwindet diese Probleme, indem sie spaltfreie Tasten bereitstellt. Die erfindungsgemäße Tastenkonstruktion besteht generell aus drei Haupt-Bestandteilen, die Figur 1 zu entnehmen sind, und zwar aus einem starren Tastenkorpus 1, einem in diesen eingeformten elastischen Tastenelement 2 und einem Schalter 3, der auf einer Montageplatte 15 wie z.B. einer Leiterplatte (PCB) angeordnet sein kann.

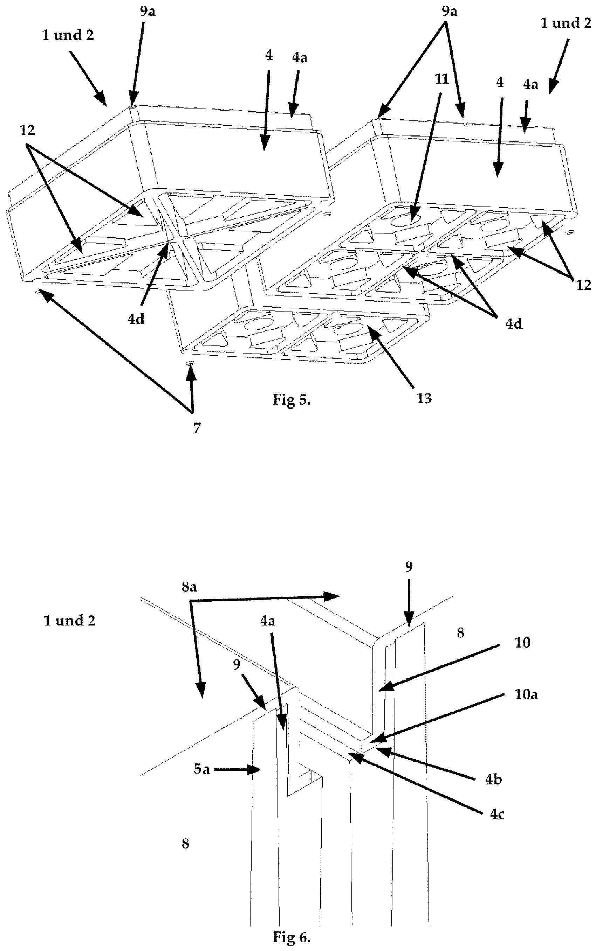

Wie in Figur 2 und 6 dargestellt, umfasst der Tastenkorpus 1 (als einer der Bestandteile der erfindungsgemäßen Taste) eine sich senkrecht erstreckende starre Außenwandung 4, die an ihrer äußeren Seite im oberen Bereich eine nach innen versetzte Profil-Außenkante 4a aufweist, wobei ein sich horizontal erstreckender Absatz 4b den Übergang zwischen der Profil-Außenkante 4a und dem verbleibenden Teil der Außenwandung 4 bildet. Der als Führungselement dienende Tastenkorpus 1 bildet einen lichtdichten Schacht 5 mit einer unteren Öffnung und einer oberen Öffnung. Oberhalb des Absatzes 4b wird, wie weiter unten im Zusammenhang mit dem elastischen Tastenelement 2 beschrieben, eine Frontplatte 6 o.ä. des Gerätes, in dem die erfindungsgemäße Taste verwendet wird, eingesetzt. Am Rand entlang der unteren Öffnung kann der Tastenkorpus 1 sich senkrecht nach unten erstreckende Positionsnippel 7 umfassen. Der Tastenkorpus 1 kann z.B. aus Polycarbonat hergestellt sein.

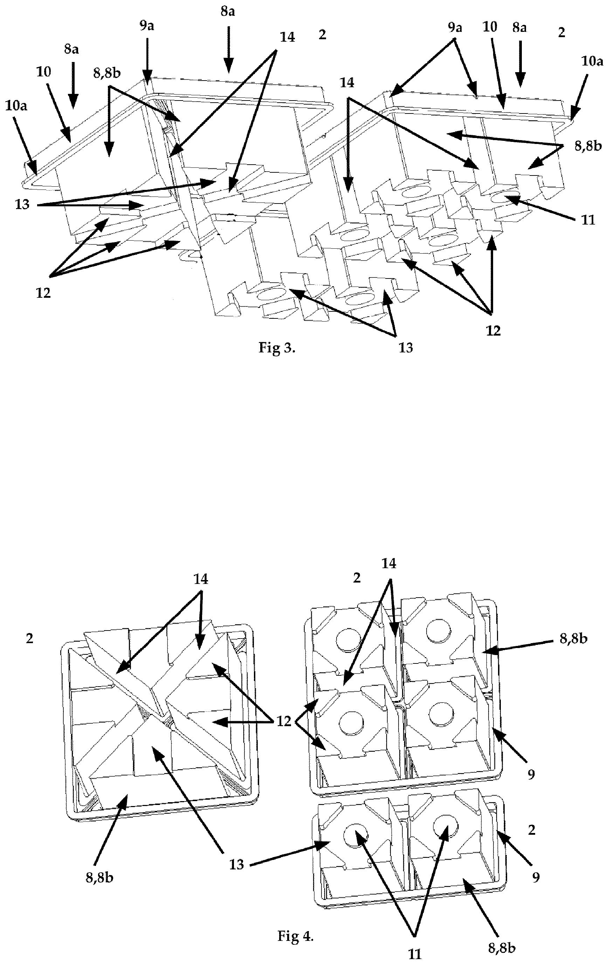

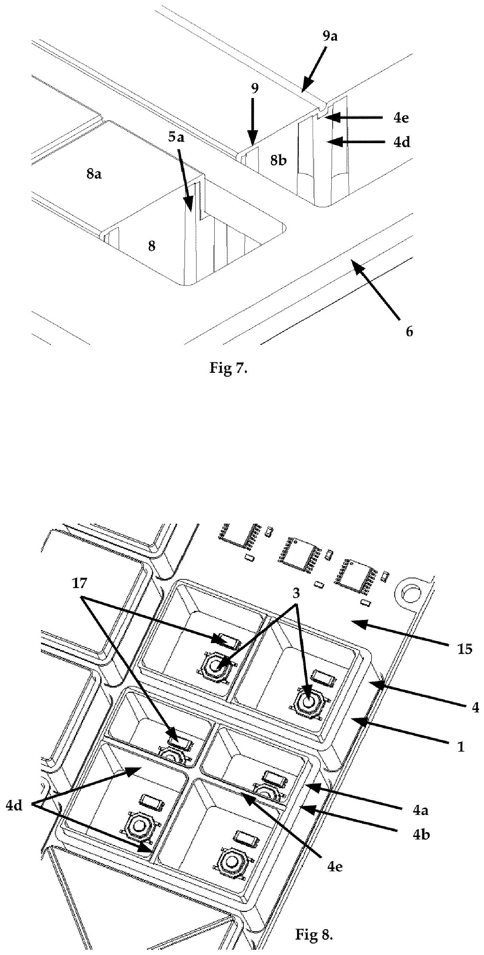

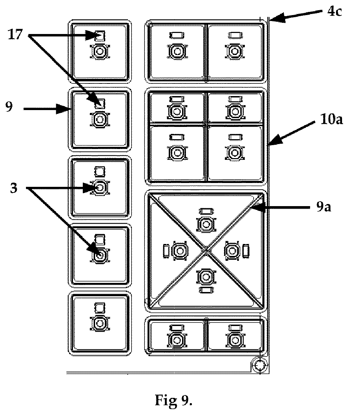

Das elastische Tastenelement 2 (als ein weiterer Bestandteil der erfindungsgemäßen Taste) ist in Figur 3 und 4 separat und in Figur 5 - 7 als bereits in den Tastenkorpus 1 eingeformt dargestellt und kann beispielsweise aus Silikon oder einem anderen elastischen Material hergestellt sein. Der Prozess des Einformens des elastischen Tastenelements 2 in den Tastenkorpus 1 wird weiter unten beschrieben. Das elastische Tastenelement 2 weist einen massiven Schaft 8 auf, der so geformt ist, dass er in seiner äußeren Kontur der Form des Schachts 5 im Tastenkorpus 1 entspricht und nach dem Einformen in den Tastenkorpus 1 durch einen Luftspalt 5a von dessen Außenwandung 4 beabstandet eingefasst wird. Die obere Seite des elastischen Tastenelements 2 bildet im wesentlichen eine Betätigungsfläche 8a, die an ihrem äußeren Rand von einer Bewegungssicke 9 oberhalb des Luftspalts 5a umgeben ist, die so ausgestaltet ist, dass das elastische Material im Bereich der Bewegungssicke in senkrechter Richtung relativ dünn ist (zum Luftspalt 5a und zur Bewegungssicke 9 siehe insbesondere Figur 6 und 7). Am Außenumfang der Bewegungssicke 9 erstreckt sich das elastische Tastenelement 2 zunächst weiter horizontal über die obere Kante der Außenwandung 4 des Tastenkorpus 1 und dann wieder abwärts und endet in einem sich horizontal auswärts erstreckenden Vorsprung 10a, der nach dem Einformen des elastischen Tastenelements 2 in den Tastenkorpus 1 auf dessen Absatz 4b aufliegt und diesen zumindest teilweise nach oben abdeckt, sodass der äußere Teil 4c des Absatzes im Falle einer nur teilweisen Bedeckung durch den Vorsprung 10a frei bleibt. Auf diese Weise wird im elastischen Tastenelement 2 ein Profilbereich 10 gebildet, dessen sich horizontal auswärts erstreckender Abschnitt oben auf der Außenwandung 4 des Tastenkorpus 1 aufliegt, dessen sich abwärts erstreckender Abschnitt außen an der Profil-Außenkante 4a des Tastenkorpus 1 anliegt und dessen Vorsprung 10a auf dem Absatz 4b des Tastenkorpus 1 aufliegt und diesen zumindest teilweise abdeckt (siehe auch hierzu insbesondere Figur 6 und 7) - nach dem (weiter unten beschriebenen) Einformen des elastischen Tastenelements 2 in den Tastenkorpus 1 haften diese beiden Teile an diesen Stellen aneinander. Da die Bewegungssicke 9 direkt am oberen Rand der erfindungsgemäßen Taste angeordnet ist, ergibt sich der Vorteil einer nach außen bewegungsfreien Einfassung des elastischen Tastenelements 2 in den Tastenkorpus 1. Durch den Vorsprung 10a ist gewährleistet, dass die Frontplatte 6 des Gerätes nach dem Einformen nicht auf dem starren Tastenkorpus 1 aufliegt, sondern auf dem elastischen Vorsprung 10a des elastischen Tastenelements 2, wodurch zweierlei erreicht wird: Erstens ergibt sich durch die Elastizität des Vorsprungs 10a eine bessere - dichtere - Auflage der Frontplatte 6 auf der Taste, und zweitens wird das Anhaften des elastischen Tastenelements 2 am Tastenkorpus 1 zusätzlich unterstützt. Figur 9 zeigt eine Durchsicht von oben durch erfindungsgemäße Tasten auf der Montageplatte 15. Figur 4 ist ferner zu entnehmen, dass das elastische Tastenelement 2 an der Unterseite des Schafts 8 einen Betätigungsvorsprung 11 umfassen kann, der so angeordnet ist, dass er beim Betätigen der Taste - d.h. beim Niederdrücken von deren Betätigungsfläche 8a - den Schalter 3, der sich auf der Montageplatte 15 befindet, betätigt (Schalter 3 und Montageplatte 15 werden in größerem Detail weiter unten beschrieben). Ist kein Betätigungselement vorgesehen, wird der Schalter 3 direkt durch die Unterseite des Schafts 8 betätigt. Der Betätigungsvorsprung 11 kann sich im unbetätigten Zustand der erfindungsgemäßen Taste oberhalb des Schalters 3 in einem Abstand von 0 - 0,1 mm befinden. Da das elastische Tastenelement 2 an bestimmten Stellen am Tastenkorpus 1 anhaftet, was zusätzlich durch die eingesetzte Frontplatte 6 unterstützt wird, wird die Bewegungssicke 9 durch ihre geringe Materialstärke und Dehnbarkeit beim Niederdrücken der Betätigungsfläche 8a gedehnt, sodass sich der von der Innenseite des Schachts 5 des Tastenkorpus 1 durch den Luftspalt 5a beabstandete Schaft 8 des elastischen Tastenelements 2 abwärts bewegen kann - dadurch, dass er vom Tastenkorpus 1 eingefasst ist, bewegt sich der Schaft 8 fast vollständig kipp- und drehfrei nach unten. Die Bewegungssicke 9 ist dabei stabil genug, um den Schaft 8 mit seiner Betätigungsfläche 8a durch die im elastischen Material gespeicherte Energie nach dem Niederdrücken wieder in die Ausgangslage, also in die unbetätigte Position, zu bewegen.

Um zu gewährleisten, dass beim Niederdrücken der Betätigungsfläche 8a die Abwärtsbewegung des Schaftes 8 noch gleichmäßiger erfolgt, kann der Schaft auf der Unterseite Bewegungsbegrenzer 12 umfassen, die so angeordnet sind, dass sie auf der Montageplatte 15 aufliegen oder diese zumindest nahezu berühren. Durch die Bewegungsbegrenzer 12 erfolgt die Abwärtsbewegung des Schafts während der Betätigung der Taste daher gleichmässig nach unten, sodass ein Kippen oder Verdrehen des Schaftes weiter minimiert wird. Die Bewegungsbegrenzer 12 können weiterhin Lichtleiter in Form von Öffnungen bzw. Durchbrüchen 13 umfassen, um eine weiter unten beschriebene Beleuchtung der erfindungsgemäßen Taste zu ermöglichen.

Der Schalter 3 (als letzter der Bestandteile der erfindungsgemäßen Taste) ist auf einer Montageplatte wie z.B. einer Leiterplatte 15 (PCB) angeordnet, die in Figur 1 und 8 gezeigt ist und auf der der Tastenkorpus 1 fixiert wird. Das kann z.B. über Vertiefungen 16 in der Montageplatte 15 erfolgen, in die die bereits im Zusammenhang mit dem Tastenkorpus 1 erwähnten Positionsnippel 7 einreifen, sodass der Tastenkorpus 1 drehsicher und positionsgenau auf der Montageplatte 15 angeordnet ist und eine Verschiebung des Tastenkorpus 1 auf der Montageplatte 15 verhindert wird. Durch diese Art der Fixierung wird der Einbau von vielen Tasten auf der Montageplatte 15 stark vereinfacht, wobei eine Leiterplatte für Tasten mit verschiedenen Bauformen verwendet werden kann.

Weiterhin können auf der Montageplatte 15 Beleuchtungselemente 17 wie z.B. LEDs für die Tasten verbaut sein, wobei die Beleuchtung von der Art Single Color, Dual Color oder Multi-Color im RGB-Farbenraum sein kann. Durch den bereits erwähnten lichtdichten Schacht 5 des Tastenkorpus 1, der an seinem unteren Ende dicht auf der Montageplatte 15 aufliegt und an seinem oberen Ende dicht vom Profilbereich 10 des elastischen Tastenelements 2 umfasst wird, ist es möglich, verschiedene erfindungsgemäße Tasten mit jeweils eigenen Farben zu beleuchten, ohne dass es dabei zu einer Lichtdiffusion zwischen den verschiedenen Tasten kommt. Des weiteren können Abbildungen, Schriftzeichen, Texte oder Formen, z.B. anhand von Lasergravur, auf die Oberfläche einer Taste aufgebracht werden.

Herstellung und Zusammenbau der erfindungsgemäßen Taste gestalten sich auf die folgende Weise. Zunächst werden die Tastenkorpusse 1 aus einem starren Material wie z.B. Polycarbonat geformt. Dann werden die z.B. aus Silikon bestehenden elastischen Tastenelemente 2 in einem Molding-Werkzeug in die Tastenkorpusse 1 geformt. Dabei weist das Molding-Werkzeug Vorsprünge auf, die so ausgestaltet sind, dass der jeweils massive mittlere Schaft 8 der elastischen Tastenelemente 2 wegen dieser Vorsprünge im Molding-Werkzeug beim Einformen in die Tastenkorpusse 1 von den Innenwänden des jeweiligen Tastenkorpus-Schachts 5 durch den Luftspalt 5a beabstandet ist, der wiederum oben von der Bewegungssicken 9 begrenzt wird. Der am Außenumfang der Bewegungssicke 9 befindliche Profilbereich 10, der sich zunächst horizontal auswärts und dann abwärts erstreckt und in dem sich horizontal auswärts erstreckenden Vorsprung 10a endet, wird beim Einformen des elastischen Tastenelements 2 in den Tastenkorpus 1 haftend mit diesem verbunden, indem der sich horizontal auswärts erstreckende Abschnitt des Profilbereichs 10 oben an der Außenwandung 4 anhaftet, der sich abwärts erstreckende Abschnitt des Profilbereichs 10 außen an der Profil-Außenkante 4a anhaftet und der Vorsprung 10a den Absatz 4b zumindest teilweise abdeckt und an diesem anhaftet, sodass die Führungselemente 1 und die Tastenelemente 2 zu an diesen Stellen zusammenhaftenden Tastenteilen 1, 2 vereinigt werden, wobei der Schaft 8 wegen des Luftspalts 5a im Schacht 8 bewegbar ist. Der bei nur teilweiser Abdeckung durch den Vorsprung 10a freibleibende Teil 4c des Absatzes 4b kann dazu verwendet werden, um die Tastenkorpusse 1 zusätzlich im Molding-Werkzeug zu fixieren. Dann werden die Tastenteile 1, 2 dem Molding-Werkzeug entnommen und - z.B. anhand von Positionsnippeln 7 und Vertiefungen 16 - auf der Montageplatte 15 fixiert, die durch die Tastenteile 1, 2 bedienbare Schalter 3 aufweist. Dann kann eine Frontplatte 6 eines Gerätes, in dem die erfindungsgemäßen Tasten verwendet werden, eingesetzt werden, sodass sie auf den Vorsprüngen 10a der elastischen Tastenelemente 2, die die Absätze 4b der Tastenkorpusse 1 zumindest teilweise überdecken, aufliegt.

Der - in der Regel erwünschte - Tastenklick ist als akustische und haptische Wahrnehmung hörbar und fühlbar und wird maßgeblich von der Mechanik des Schalters 3 auf der Leiterplatte 15 erzeugt. Breite und Dicke des optionalen Betätigungsvorsprungs 11, Auflagefläche des Schalters 3 und Härte bzw. Elastizität des Materials, aus dem das elastische Tastenelement 2 hergestellt ist, beeinflussen allerdings das taktile Gefühl beim Drücken der erfindungsgemäßen Taste, wobei Druckgefühl und Klickgeräusch im Bereich von "dumpf" bis "knackig" zum Großteil von der Dicke und Breite der Bewegungssicke 9 bestimmt werden, wohingegen das Druckgefühl im Bereich von "weich" bis "hart" zum Großteil von der Härte des Materials, aus dem das elastische Tastenelement 2 besteht, und den Dimensionen bzw. der Formgebung des Betätigungsvorsprungs 11 bestimmt wird. Gemäß der vorliegenden Erfindung wird die Klick-Haptik durch das elastische Tastenelement 2 selbst nicht gedämpft und auch nicht übermäßig an umgebene Gehäuseteile übertragen, da das elastische Tastenelement 2, wie oben erläutert, nur über die dünne Bewegungssicke 9 in Relativbewegung zum Tastenkorpus 1 versetzt wird, die dadurch als Körperschall-Barriere zu den äußeren Teilen der TastenKonstruktion und anderen Gehäuseelementen wie z.B. der Frontplatte 6 wirkt. Gleichzeitig werden Klick und Hub des Schalters 3 ungehindert auf die Betätigungsfläche 8a des elastischen Tastenelements 2 geführt. Dies führt zu einem angenehmen Klickgeräusch und einer spürbaren Oberflächenbewegung der gedrückten Taste. Im Zusammenhang mit der akustischen und haptischen Wahrnehmung des Tastenklicks haben sich folgende Parameter als geeignet erwiesen, wenn für das elastische Tastenelement 2 Silikon verwendet wird:

| | |
|---|---|
| Dicke der Bewegungssicke: | 0.3 mm - 0.5 mm (bevorzugt: 0.4 mm) |
| Silikonhärte: | 40-60 Shore-A (bevorzugt: 50 Shore-A) |
| Schalter-Betätigungskraft: | 1-2N (bevorzugt: 1,6N) |

In einer weiteren Ausführungsform besteht jede erfindungsgemäße Taste aus mehreren Einzeltasten und bildet somit eine Multitaste. Die Multitaste weist alle Merkmale der oben beschriebenen erfindungsgemäßen (Einzel-)Taste auf, zeichnet sich jedoch durch zusätzliche Merkmale aus, die weitere Funktionalität bewirken und physisch alle innerhalb des Schachts 5 angeordnet sind. Die zur Beschreibung der (Einzel-)Taste herangezogenen Figuren 1 - 9 zeigen bereits auch die Ausführungsform der Multitaste und werden daher teilweise wieder für deren Beschreibung herangezogen, die sich im übrigen an die oben verwendete Reihenfolge - Tastenkorpus, elastisches Tastenelement, Schalter - hält.

Bei der Multitaste enthält der von der Außenwandung 4 des Tastenkorpus 1 umschlossene Schacht 5 weitere Innenwandungen 4d, die den Schacht lichtdicht in Einzelschächte unterteilen. Die Innenwandungen 4d können - statt der Profil-Außenkante 4a und dem Absatz 4b der Außenwandung 4 - in ihrer Oberkante eine Vertiefung 4e aufweisen. Wie die Außenwandung 4 können auch die Innenwandungen 4d an ihrer Unterseite mit Positionsnippeln 7 versehen sein.

Entsprechend den obigen Merkmalen im Tastenkorpus 1 weist das elastische Tastenelement 2 der Multitaste in seinem Schaft 8 Einfassungen 14 auf, die die - davon wieder durch Luftspalte beabstandeten - Innenwandungen 4d des Tastenkorpus aufnehmen und den Schaft 8 in Teilschäfte 8b unterteilen, wobei die Materialstärke des elastischen Tastenelements 2 oberhalb der Einfassungen 14 der Materialstärke der Bewegungssicke 9 am äußeren Umfang der (Multi-)Taste entspricht. Entsprechend den optionalen Vertiefungen 4e in den Oberkanten der Innenwandungen 4d kann der Materialbereich des elastischen Tastenelements 2 oberhalb jeder Einfassung 14 eine Profilvertiefung 9a aufweisen, die der Vertiefung 4a in der Innenwandung 4d folgt und daher einerseits in die Vertiefung 4e eingreift und andererseits an der Oberseite des elastischen Tastenelements 2 eine Rille bildet. Auf diese Weise beeinflusst die Betätigung einer Teiltaste nicht die andere(n) Teiltaste(n), da keine Scherkräfte übertragen werden. Weiterhin wird eine visuelle Trennung der Teiltasten erreicht. Wie bereits erwähnt, entspricht die Stärke des Materialbereichs oberhalb der Einfassungen 14 (und damit auch oberhalb der Innenwandungen 4d) der Stärke der Bewegungssicke 9 und ist daher an diesen Stellen des elastischen Tastenelements 2 - und damit zwischen den Teiltasten einer Multitaste - ausreichend dünn und dehnbar, um die Abwärtsbewegung des jeweiligen Teils des Schafts 8 bei Niederdrücken der entsprechenden Betätigungsfläche 8a auszuführen und ihn nach der Einwirkung wieder in die Ausgangslage zurück zu bewegen - ohne Einfluss auf die andere(n) Teiltaste(n).

Wie schon bei der Einzeltaste kann auch das elastische Tastenelement 2 der Multitaste an der Unterseite jedes Teilschafts 8b wieder einen Betätigungsvorsprung 11 und/oder Bewegungsbegrenzer 12, die mit Beleuchtungsdurchbrüchen 13 versehen sein können, umfassen.

Sowohl die Einzel- als auch die Multitaste nach der vorliegenden Erfindung sind spaltfrei, da sich die Bewegungssicke 9 oben auf der Taste befindet und den darunter befindlichen Luftspalt 5a dicht nach außen abschließt, wobei Analoges für die Luftspalte zwischen den Innenwandungen 4d und den Einfassungen 14 bei der Multitaste gilt. Dadurch werden die eingangs erwähnten spaltbedingten Probleme herkömmlicher Tasten - wie etwa durch Verunreinigungen bedingte Verschmutzung, bis hin zum völligen Funktionsausfall, oder Lichtdiffusion - vermieden. Die erfindungsgemäße Taste kann in einer Vielzahl von Geräten Verwendung finden, so z.B. in Computern, Musikinstrumenten usw.

## Patentansprüche

1. Spaltfreie Taste, umfassend ein Führungselement (1), ein bewegliches Betätigungselement (2) und einen Schalter (3), der auf einer Montageplatte (15) angeordnet ist, wobei
das Führungselement (1) eine starre Außenwandung (4) aufweist, die einen inneren Schacht (5) mit einer unteren Öffnung und einer oberen Öffnung bildet und an ihrer äußeren Seite im oberen Bereich eine nach innen versetzte Profil-Außenkante (4a) sowie einen den Übergang zwischen der oberen Profil-Außenkante (4a) und dem verbleibenden unteren Teil der Außenwandung (4) bildenden sich im wesentlichen horizontal erstreckenden Absatz (4b) umfasst;
das bewegliche Betätigungselement (2) ein aus einem elastischen Material hergestelltes elastisches Tastenelement (2) ist und einen von den Innenwänden des Schachts (5) durch einen Luftspalt (5a) beabstandeten massiven mittleren Schaft (8) mit einer oberen Betätigungsfläche (8a) aufweist sowie eine die Betätigungsfläche (8a) an ihrem äußeren Rand oberhalb des Luftspalts (5a) umgebende Bewegungssicke (9), die direkt am oberen Rand der Taste angeordnet ist und den darunter befindlichen Luftspalt (5a) dicht nach außen abschließt, sodass die Taste spaltfrei ist,
und einen am Außenumfang der Bewegungssicke (9) befindlichen Profilbereich (10), der sich zunächst horizontal auswärts und dann abwärts erstreckt und in einem sich horizontal auswärts erstreckenden Vorsprung (10a) endet;
wobei der sich horizontal auswärts erstreckende Abschnitt des Profilbereichs (10) oben auf der Außenwandung (4) aufliegt, der sich abwärts erstreckende Abschnitt des Profilbereichs (10) außen an der Profil-Außenkante (4a) anliegt und der Vorsprung (10a) auf dem Absatz (4b) aufliegt und diesen zumindest teilweise abdeckt.

2. Taste nach Anspruch 1, **dadurch gekennzeichnet, dass** das Führungselement (1) aus Polycarbonat besteht.

3. Taste nach Anspruch 1 oder 2, **dadurch gekennzeichnet, dass** das elastische Tastenelement (2) aus Silikon besteht.

4. Taste nach einem der Ansprüche 1-3, **dadurch gekennzeichnet, dass** der Vorsprung (10a) den Absatz (4b) nur teilweise bedeckt, sodass ein Teil (4c) des Absatzes (4b) frei bleibt.

5. Taste nach einem der Ansprüche 1 - 4, **dadurch gekennzeichnet, dass** die Außenwandung (4) an ihrer Unterseite Positionsnippel (7) aufweist, die in Vertiefungen (16) auf der Montageplatte (15) eingreifen.

6. Taste nach einem der Ansprüche 1 - 5, **dadurch gekennzeichnet, dass** die Montageplatte (15) Beleuchtungselemente (17) aufweist.

7. Taste nach einem der Ansprüche 1-6, **dadurch gekennzeichnet, dass** der Schaft (8) einen Betätigungsvorsprung (11) zum Betätigen des Schalters (3) aufweist.

8. Taste nach einem der Ansprüche 1-7, **dadurch gekennzeichnet, dass** der Schaft (8) Bewegungsbegrenzer (12), die auf der Montageplatte (15) aufliegen oder diese nahezu berühren, aufweist.

9. Taste nach Anspruch 8, **dadurch gekennzeichnet, dass** die Bewegungsbegrenzer (12) Lichtdurchbrüche (13) aufweisen.

10. Taste nach einem der Ansprüche 1 - 6, **dadurch gekennzeichnet, dass** das Führungselement (1) Innenwandungen (4d) aufweist und dass das elastische Tastenelement (2) Einfassungen (14) aufweist, die die davon durch Luftspalte beabstandeten Innenwandungen (4d) aufnehmen, sodass eine Multitaste mit Teilschäften (8b) gebildet wird.

11. Multitaste nach Anspruch 10, **dadurch gekennzeichnet, dass** die Innenwandungen (4d) in ihren Oberkanten jeweils eine Vertiefung (4e) aufweisen und dass das elastische Tastenelement (2) im Bereich oberhalb der Einfassungen (14) jeweils eine Profilvertiefung (9a) aufweist, die der Vertiefung (4e) folgt, sodass sie in diese eingreift und an der Oberseite des elastischen Tastenelements (2) jeweils eine Rille bildet, wobei die Materialstärke des elastischen Tastenelements (2) oberhalb der Einfassungen (14) der Materialstärke der Bewegungssicke (9) entspricht.

12. Multitaste nach Anspruch 10 oder 11, **dadurch gekennzeichnet, dass** jeder Teilschaft (8b) einen Betätigungsvorsprung (11) zum Betätigen des Schalters (3) aufweist.

13. Multitaste nach einem der Ansprüche 10 - 12, **dadurch gekennzeichnet, dass** jeder Teilschaft (8b) Bewegungsbegrenzer (12), die auf der Montageplatte (15) aufliegen oder diese nahezu berühren, aufweist.

14. Multitaste nach Anspruch 13, **dadurch gekennzeichnet, dass** die Bewegungsbegrenzer (12) Lichtdurchbrüche (13) aufweisen.

15. Verfahren zum Herstellen spaltfreier Tasten nach einem der Ansprüche 1 - 10, umfassend die folgenden Schritte:
Formen von Führungselementen (1) aus einem starren Material, die jeweils eine Außenwandung (4) aufweisen, die einen inneren Schacht (5) mit einer unteren Öffnung und einer oberen Öffnung bildet und an ihrer äußeren Seite im oberen Bereich eine nach innen versetzte Profil-Außenkante (4a) sowie einen den Übergang zwischen der oberen Profil-Außenkante (4a) und dem verbleibenden unteren Teil der Außenwandung (4) bildenden sich im wesentlichen horizontal erstreckenden Absatz (4b) umfasst;
Formen von aus einem elastischen Material bestehenden Tastenelementen (2) in die Führungselemente (1) in einem Molding-Werkzeug, das Vorsprünge aufweist, sodass die Tastenelemente (2) jeweils einen massiven mittleren Schaft (8), der wegen der Vorsprünge im Molding-Werkzeug von den Innenwänden des Schachts (5) durch einen Luftspalt (5a) beabstandet ist, mit einer oberen Betätigungsfläche (8a) aufweisen sowie eine die Betätigungsfläche (8a) an ihrem äußeren Rand oberhalb des Luftspalts (5a) umgebende Bewegungssicke (9), die direkt am oberen Rand der Taste angeordnet ist und den darunter befindlichen Luftspalt (5a) dicht nach außen abschließt, sodass die Taste spaltfrei ist,
und einen am Außenumfang der Bewegungssicke (9) befindlichen Profilbereich (10), der sich zunächst horizontal auswärts und dann abwärts erstreckt und in einem sich horizontal auswärts erstreckenden Vorsprung (10a) endet, wobei der sich horizontal auswärts erstreckende Abschnitt des Profilbereichs (10) oben an der Außenwandung (4) anhaftet, der sich abwärts erstreckende Abschnitt des Profilbereichs (10) außen an der Profil-Außenkante (4a) anhaftet und der Vorsprung (10a) den Absatz (4b) zumindest teilweise abdeckt und an diesem anhaftet, sodass die Führungselemente (1) und die Tastenelemente (2) zu an diesen Stellen zusammenhaftenden Tastenteilen (1, 2) vereinigt werden, wobei der Schaft (8) wegen des Luftspalts (5a) im Schacht (8) bewegbar ist;
Entfernen der zusammenhaftenden Tastenteile (1, 2) aus dem Molding-Werkzeug;
Einsetzen der zusammenhaftenden Tastenteile (1, 2) in eine Montageplatte (15), die durch die Tastenteile (1, 2) bedienbare Schalter (3) aufweist.

16. Verfahren nach Anspruch 15, **dadurch gekennzeichnet, dass** die Führungselemente (1) aus Polycarbonat und die Tastenelemente (2) aus Silikon bestehen.

## Claims

1. Seamless button, comprising a guiding element (1), a movable actuating element (2) and a switch (3) which is located on a mounting plate (15), wherein
the guiding element (1) includes a rigid outer wall (4) which forms an inner chamber (5) with a bottom opening and a top opening and which is provided on its outer side in the upper area with an inwardly offset outer profile edge (4a) and with a pedestal (4b) extending substantially horizontally and forming the transition between the upper outer profile edge (4a) and the remaining part of the outer wall (4);
the movable actuating element (2) is an elastic button element (2) made of elastic material and provided with a massive middle shaft (8) spaced from the inner walls of the chamber (5) by an air gap (5a) and having an upper actuating surface (8a), with a movement crimp (9) surrounding the outer rim of the actuating surface (8b) above the air gap (5a) and being located directly at the upper rim of the button and enclosing the air gap (5a) located underneath tightly outwardly such that the button is seamless, and with a profile area (10) arranged at the outer circumference of the movement crimp (9) and extending firstly horizontally outwardly and then downwardly and ending in a horizontally outwardly extending protrusion (10a);
wherein the horizontally outwardly extending portion of the profile area (10) rests on top of the outer wall (4), the downwardly extending portion of the profile area (10) rests on the outside of the outer profile edge (4a) and the protrusion (10a) rests on the pedestal (4b) covering it at least partially.

2. Button according to claim 1, **characterized in that** the guiding element (1) is made of polycarbonate.

3. Button according claim 1 or 2, **characterized in that** the elastic button element (2) is made of silicone.

4. Button according to one of the claims 1 - 3, **characterized in that** the protrusion (10a) covers the pedestal (4b) only partially such that a part (4c) of the pedestal (4b) remains uncovered.

5. Button according to one of the claims 1-4, **characterized in that** the outer wall (4) is provided on its bottom side with positioning nipples (7) engaging indentations (16) on the mounting plate (15).

6. Button according to one of the claims 1 - 5, **characterized in that** the mounting plate (15) is provided with illumination elements (17).

7. Button according to one of the claims 1-6, **characterized in that** the shaft (8) is provided with an actuating protrusion (11) for actuating the switch (3).

8. Button according to one of the claims 1- 7, **characterized in that** the shaft (8) is provided with movement restrictors (12) resting on the mounting plate (15) or nearly touching it.

9. Button according to claim 8, **characterized in that** the movement restrictors (12) are provided with illumination cut-outs (13).

10. Button according to one of the claims 1 - 6, **characterized in that** the guiding element (1) is provided with inner walls (4d) and **in that** the elastic button element (2) is provided with recesses (14) for receiving the inner walls (4d) that are separated therefrom by an air gap such that a multi-button with partial shafts (8b) is formed.

11. Multi-button according to claim 10, **characterized in that** the inner walls (4d) each are provided with an indentation (4e) in their top edges and **in that** the elastic button element (2) in the portion above the recesses (14) is provided with profile indentations (9a) each of which follows the indentation (4e) such that it engages same, forming a groove on the top side of the elastic button element (2), wherein the material thickness of the elastic button element (2) above the recesses (14) corresponds to the material thickness of the movement crimp (9).

12. Multi-button according to claim 10 or 11, **characterized in that** each partial shaft (8b) has an actuating protrusion (11).

13. Multi button according to one of the claims 10 - 12, **characterized in that** each partial shaft (8b) is provided with movement restrictors (12) resting on the mounting plate (15) or nearly touching it.

14. Multi-button according to claim 13, **characterized in that** the movement restrictors (12) are provided with illumination cut-outs (13).

15. Method for manufacturing seamless buttons according to one of claims 1-14, comprising the following steps:
molding guiding elements (1) of a rigid material which have an outer wall (4) which forms an inner chamber (5) with a bottom opening and a top opening and which is provided on its outer side in the upper area with an inwardly offset outer profile edge (4a) and with a pedestal (4b) extending horizontally and forming the transition between the upper outer profile edge (4a) and the remaining part of the outer wall (4);
molding button elements (2) made from an elastic material into the guiding elements (1) in a molding tool which is provided with protrusions such that the button elements (2) each have a massive middle shaft (8) spaced from the inner walls of the chamber (5) by an air gap (5a) due to the recesses inside the molding tool and having an upper actuating surface (8a), a movement crimp (9) surrounding the outer rim of the actuating surface (8a) above the air gap (5a) and being located directly at the upper rim of the button and enclosing the air gap (5a) located underneath tightly outwardly such that the button is seamless, and a profile area (10) arranged at the outer circumference of the movement crimp (9) and extending firstly horizontally outwardly and then downwardly and ending in a horizontally outwardly extending protrusion (10a), wherein the horizontally outwardly extending portion of the profile area (10) adheres to the outer wall (4), the downwardly extending portion of the profile area (10) adheres to the outside of the outer profile edge (4a) and the protrusion (10a) rests on the pedestal (4b) covering it at least partially and adheres thereto such that the guiding elements (1) and the button elements (2) are united to adhering button parts (1, 2) in these areas, wherein the shaft (8) is movable due to the air gap (5a) inside the chamber (5);
removing the adhering button parts (1, 2) from the molding tool;
inserting the adhering button parts (1, 2) into a mounting plate (15) which is provided with switches (3) actuable by the button parts (1, 2).

16. Method according to claim 15, **characterized in that** the guiding elements (1) are made of polycarbonate and the button elements (2) are made of silicone.

## Revendications

1. Touche sans espace, comprenant un élément de guidage (1), un élément d'actionnement mobile (2) et un commutateur (3) qui est agencé sur une plaque de montage (15),
l'élément de guidage (1) présentant une paroi extérieure (4) rigide qui forme un puits intérieur (5) avec une ouverture inférieure et une ouverture supérieure et comprend sur son côté extérieur dans la zone supérieure une arête extérieure profilée (4a) décalée vers l'intérieur ainsi qu'un épaulement (4b) s'étendant sensiblement horizontalement formant le passage entre l'arête extérieure profilée (4a) supérieure et la partie inférieure restante de la paroi extérieure (4) ;
l'élément d'actionnement mobile (2) étant un élément de touche (2) élastique fabriqué en un matériau élastique et présentant une tige (8) médiane massive espacée des parois intérieures du puits (5) par une fente d'air (5a) avec une surface d'actionnement (8a) supérieure ainsi qu'une moulure de déplacement (9) entourant la surface d'actionnement (8a) sur son bord extérieur au-dessus de la fente d'air (5a), laquelle moulure est directement agencée sur le bord supérieur de la touche et termine la fente d'air (5a) se trouvant dessous hermétiquement vers l'extérieur de sorte que la touche soit sans espace,
et une zone profilée (10) se trouvant sur la périphérie extérieure de la moulure de déplacement (9) qui s'étend tout d'abord horizontalement vers l'extérieur et ensuite vers le bas et se terminant en une saillie (10a) s'étendant horizontalement vers l'extérieur ;
dans laquelle la section s'étendant horizontalement vers l'extérieur de la zone profilée (10) se trouve en haut sur la paroi extérieure (4), la section s'étendant vers le bas de la zone profilée (10) repose à l'extérieur contre l'arête extérieure profilée (4a) et la saillie (10a) repose sur l'épaulement (4b) et la recouvre au moins partiellement.

2. Touche selon la revendication 1, **caractérisée en ce que** l'élément de guidage (1) est en polycarbonate.

3. Touche selon la revendication 1 ou 2, **caractérisée en ce que** l'élément de touche (2) élastique est en silicone.

4. Touche selon l'une des revendications 1 à 3, **caractérisée en ce que** la saillie (10a) ne recouvre l'épaulement (4b) que partiellement de sorte qu'une partie (4c) de l'épaulement (4b) reste libre.

5. Touche selon l'une des revendications 1 à 4, **caractérisée en ce que** la paroi extérieure (4) présente, sur son côté inférieur, des tétons de position (7) qui viennent en prise avec des cavités (16) sur la plaque de montage (15).

6. Touche selon l'une des revendications 1 à 5, **caractérisée en ce que** la plaque de montage (15) présente des éléments d'éclairage (17).

7. Touche selon l'une des revendications 1 à 6, **caractérisée en ce que** la tige (8) présente une saillie d'actionnement (11) pour l'actionnement du commutateur (3).

8. Touche selon l'une des revendications 1 à 7, **caractérisée en ce que** la tige (8) présente des limitateurs de déplacement (12) qui reposent sur la plaque de montage (15) ou la touchent presque.

9. Touche selon la revendication 8, **caractérisée en ce que** les limitateurs de déplacement (12) présentent des interruptions de lumière (13).

10. Touche selon l'une des revendications 1 à 6, **caractérisée en ce que** l'élément de guidage (1) présente des parois intérieures (4d) et que l'élément de touche (2) élastique présente des bordures (14) qui reçoivent les parois intérieures (4d) espacées de celles-ci par des fentes d'air de sorte qu'une multitouche soit formée avec des tiges partielles (8b).

11. Multitouche selon la revendication 10, **caractérisée en ce que** les parois intérieures (4d) présentent sur leurs arêtes supérieures à chaque fois une cavité (4e) et que l'élément de touche (2) élastique présente, dans la zone au-dessus des bordures (14), à chaque fois une cavité profilée (9a) qui suit la cavité (4e) de sorte qu'elle vienne en prise avec celle-ci et forme, sur le côté supérieur de l'élément de touche (2) élastique, à chaque fois une rainure, dans laquelle l'épaisseur de matériau de l'élément de touche (2) élastique correspond au-dessus des bordures (14) à l'épaisseur de matériau de la moulure de déplacement (9).

12. Multitouche selon la revendication 10 ou 11, **caractérisée en ce que** chaque tige partielle (8b) présente une saillie d'actionnement (11) pour l'actionnement du commutateur (3).

13. Multitouche selon l'une des revendications 10 à 12, **caractérisée en ce que** chaque tige partielle (8b) présente des limitateurs de déplacement (12) qui reposent sur la plaque de montage (15) ou la touchent presque.

14. Multitouche selon la revendication 13, **caractérisée en ce que** les limitateurs de déplacement (12) présentent des ouvertures de lumière (13).

15. Procédé de fabrication de touches sans espace selon l'une des revendications 1 à 10, comprenant les étapes suivantes :
formation d'éléments de guidage (1) en un matériau rigide qui présentent respectivement une paroi extérieure (4) qui forme un puits intérieur (5) avec une ouverture inférieure et une ouverture supérieure et comporte sur son côté extérieur dans la zone supérieure une arête extérieure profilée (4a) décalée vers l'intérieur ainsi qu'un épaulement (4b) s'étendant sensiblement horizontalement formant le passage entre l'arête extérieure profilée (4a) supérieure et la partie inférieure restante de la paroi extérieure (4) ;
formation d'éléments de touche (2) en un matériau élastique dans les éléments de guidage (1) dans un outil de moulage qui présente des saillies de sorte que les éléments de touche (2) présentent respectivement une tige (8) médiane massive qui est espacée intérieures du puits (5) par une fente d'air (5a) à cause des saillies dans l'outil de moulage des parois avec une surface d'actionnement supérieure (8a) ainsi qu'une moulure de déplacement (9) entourant la surface d'actionnement (8a) sur son bord extérieur au-dessus de la fente d'air (5a), qui est agencée directement sur le bord supérieur de la touche et termine la fente d'air (5a) se trouvant dessous hermétiquement vers l'extérieur de sorte que la touche soit sans espace,
et une zone profilée (10) se trouvant sur la périphérie extérieure de la moulure de déplacement (9), qui s'étend tout d'abord horizontalement vers l'extérieur et ensuite vers le bas et se termine en une saillie (10a) s'étendant horizontalement vers l'extérieur, dans lequel la section s'étendant horizontalement vers l'extérieur de la zone de profil (10) adhère en haut sur la paroi extérieure (4), la section s'étendant vers le bas de la zone profilée (10) adhère à l'extérieur sur l'arête extérieure profilée (4a) et la saillie (10a) recouvre au moins partiellement l'épaulement (4b) et adhère sur celui-ci de sorte que les élément de guidage (1) et les éléments de touche (2) soient réunis pour former des parties de touche (1, 2) adhérant à ces endroits, dans lequel la tige (8) est mobile à cause de la fente d'air (5a) dans le puits (8) ;
retrait des parties de touche (1, 2) adhérentes hors de l'outil de moulage ;
insertion des parties de touche (1, 2) adhérentes dans une plaque de montage (15) qui présente des commutateurs (3) commandables par les parties de touche (1, 2).

16. Procédé selon la revendication 15, **caractérisé en ce que** les éléments de guidage (1) sont en polycarbonate et les éléments de touche (2) en silicone.
